# FASCICULE DE BREVET EUROPEEN

(11) **EP 2 115 837 B1**
(45) Date de publication et mention de la délivrance du brevet: **20.06.2012**
(21) Numéro de dépôt: 08761822.9
(22) Date de dépôt: 31.01.2008
(51) Int. Cl.: H02G 3/04

(54) **DISPOSITIF DE FIXATION POUR CHEMIN DE CABLES EN FILS**
VORRICHTUNG ZUR BEFESTIGUNG EINER GARN-KABELBAHN
ATTACHMENT DEVICE FOR A YARN CABLE TRACK

(30) Priorité: 31.01.2007 FR 0752993
(43) Date de publication de la demande: 11.11.2009
(73) Titulaire: ICM Group, 21500 Montbard (FR)
(72) Inventeur: LETOURNEUR, Mickael, F-14540 SOLIERS (FR); QUERTELET, Stéphane, F-60190 Remy (FR)
(74) Mandataire: Hartmann, Jean-Luc
(86) Numéro de dépôt international: PCT/FR2008/000114
(87) Numéro de publication internationale: WO 2008/110687

(56) Documents cités:
- EP-A1- 1 406 362
- FR-A1- 2 796 121
- FR-A1- 2 864 361

## Description

La présente invention concerne un dispositif de fixation pour chemin de câbles en fils.

De manière connue, des chemins de câbles en fils se présentent sous la forme d'un canal constitué d'un maillage de fils. Ce maillage comporte d'une part des fils longitudinaux, appelés habituellement fils de chaîne, et d'autre part des fils transversaux appelés fils de trame. Les fils de chaîne sont des fils rectilignes, ou sensiblement rectilignes, et sont soudés aux fils de trame. Ces derniers présentent généralement une forme globale en U et sont disposés avec un pas régulier le long des fils de chaîne. Ainsi, un chemin de câbles comporte globalement trois panneaux, à savoir un panneau de fond et deux panneaux latéraux.

De tels chemins de câbles sont couramment utilisés pour assurer le logement, le soutien et la protection de conduites souples de diverses natures : conduites électriques (basse tension ou haute tension), câbles de transmission de données (téléphone, fibre optique, etc...), conduites de fluides, etc....

II est parfois souhaité dans un chemin de câbles de regrouper des câbles de manière à former un faisceau de câbles dans le chemin de câbles et de fixer ce faisceau dans le chemin de câbles. On utilise alors par exemple un lien qui vient entourer les câbles concernés et un fil de chaîne du chemin de câbles.

Il peut également être souhaité de fixer un accessoire dans le chemin de câbles. La solution classique consiste alors à le boulonner dans le fond du chemin de câbles ou bien sur une aile latérale.

La demande de brevet français FR 2 864 361 décrit un accessoire pour la rehausse et l'éclissage de chemins de câbles en fils comportant des fils de chaîne longitudinaux et des fils de trame transversaux, présentant une base avec une face de montage sur le chemin de câbles et des moyens de fixation et comportant au moins un logement longitudinal en forme de goulotte destiné à recevoir un premier fil du chemin de câbles et réalisé dans la face de montage, au moins une surface d'appui réalisée en contre-dépouille par rapport à la face de montage, ladite surface s'étendant perpendiculairement au logement longitudinal et se trouvant disposée parallèlement au fond du logement longitudinal à un niveau intermédiaire entre le fond de ce logement et la face de montage, et au moins une découpe transversale correspondant à chaque intersection entre un logement longitudinal et une surface d'appui, cette découpe s'étendant d'un bord de la face de montage jusqu'à un logement longitudinal.

La présente invention a alors pour but de fournir un dispositif permettant de fixer des éléments -faisceau de câbles, accessoire, objet divers, ...-dans un chemin de câbles. Ce dispositif pourra de préférence d'une part s'adapter à de nombreux types de chemin de câbles et d'autre part être monté rapidement, sans pièces annexes (boulons ou autres) et sans outils. Ce dispositif pourra également, avantageusement, être mis en place sur site en fonction des besoins.

À cet effet, l'invention propose un dispositif de fixation caractérisé dans la revendication 1.

Ce dispositif peut facilement être mis en place, sans aucun outil, sur un chemin de câbles. Un premier fil du chemin de câbles (fil de chaîne ou fil de trame) vient en appui au fond du logement en forme de goulotte tandis qu'un second fil du chemin de câbles (fil de trame ou fil de chaîne) vient s'appuyer sur la surface d'appui permettant ainsi un maintien du dispositif avec un serrage dépendant de la distance séparant le fond de la goulotte de la surface d'appui. Le montage est ici réalisé en s'appuyant sur deux faces (arêtes) de fils du chemin de câbles reliées par soudure. On peut de la sorte s'affranchir du diamètre des fils utilisés.

Ce dispositif permet de s'adapter à des formes de réalisation du chemin de câbles, d'avoir un meilleur maintien pour permettre la fixation d'un accessoire sur lequel une charge plus ou moins importante est exercée.

Le dispositif de fixation peut alors être monté avec deux orientations différentes, perpendiculaires l'une par rapport à l'autre, sur le chemin de câbles.

Pour une meilleure tenue sur le,chemin de câbles sur lequel le dispositif selon l'invention est monté, un bossage peut être réalisé sur la surface d'appui. Le montage est alors réalisé avec un encliquetage.

Une forme de réalisation prévoit que la base du dispositif selon l'invention est réalisée dans une matière synthétique moulée. Dans ce cas, ce dispositif de fixation est par exemple associé à un dispositif de maintien de câbles. Un tel dispositif de maintien de câbles est par exemple du type de celui décrit dans le brevet US-7,107,653.

Une autre forme de réalisation prévoit que la base du dispositif selon l'invention est réalisée dans une tôle métallique découpée et pliée. Les moyens de fixation de ce dispositif se présentent alors par exemple sous la forme d'alésages circulaires et/ou de trous oblongs réalisés dans la tôle.

La présente invention concerne également une forme de réalisation d'un dispositif de fixation caractérisé dans la revendication 6.

Enfin, la présente invention concerne également un ensemble comportant d'une part un tronçon de chemin de câbles présentant des fils de chaîne longitudinaux et des fils de trame transversaux en forme de U et d'autre part un dispositif de fixation tel que décrit plus haut, cet ensemble étant caractérisé en ce que la base du dispositif de fixation se trouve à l'intérieur du tronçon de chemin de câbles, c'est-à-dire entre les branches du U des fils de trame, et en ce que chaque logement longitudinal reçoit un fil de chaîne. Dans cette forme de réalisation avantageuse, le montage du dispositif de fixation se réalise en positionnant ledit dispositif dans le chemin de câbles et en le faisant coulisser le long d'un fil de chaîne. Ceci est avantageux car lorsque des câbles sont déjà disposés dans le tronçon de chemin de câbles, le mouvement pour réaliser la fixation du dispositif de fixation est parallèle aux câbles déjà en place et peut donc être réalisé facilement. Généralement, les mouvements lors de la fixation d'un chemin de câbles sur un support ou similaire se fait par coulissement le long d'un fil de trame et donc perpendiculairement aux câbles se trouvant éventuellement dans le chemin de câbles.

Des détails et avantages de la présente invention ressortiront mieux de la description qui suit, faite en référence aux dessins schématiques annexés sur lesquels :
La figure 1 représente schématiquement un dispositif de fixation selon l'invention monté dans un chemin de câbles en fils,
La figure 2 est une vue en coupe transversale du dispositif de fixation de la figure 1,
La figure 3 est une vue en coupe longitudinale correspondant au plan de coupe III-III de la figure 2 au cours du montage du dispositif de fixation sur le chemin de câbles,
La figure 4 est une vue de dessous correspondant à l'étape de montage de la figure 3,
La figure 5 est une vue en perspective d'une autre forme de réalisation d'un dispositif de fixation monté dans un chemin de câbles en fils,
La figure 6 est une vue en coupe selon la ligne de coupe VI-VI de la figure 5,
La figure 7 est une vue en perspective montrant deux dispositifs de fixation d'une autre variante de réalisation montés dans un chemin de câbles, et
La figure 8 est une vue en perspective de dessous d'une autre variante de réalisation d'un dispositif de fixation selon l'invention monté dans un chemin de câbles en fils.

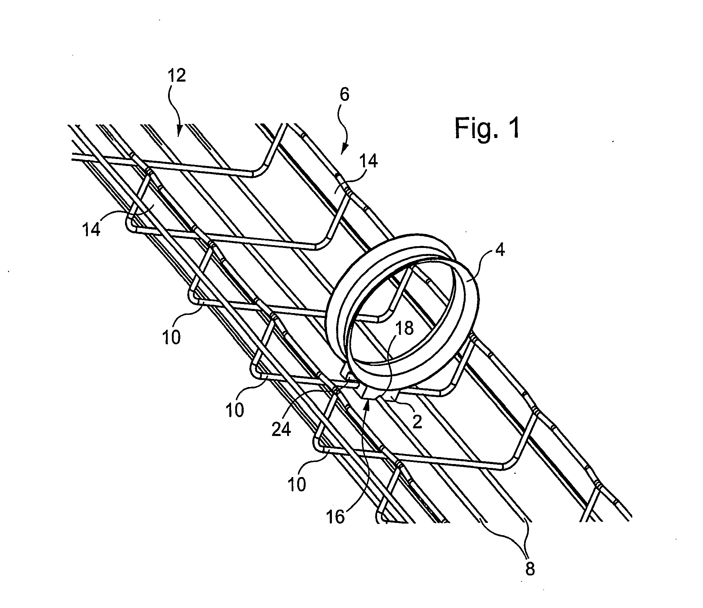

Les figures 1 à 4 représentent une première forme de réalisation d'un dispositif de fixation selon l'invention. Ce dispositif comporte d'une part une base 2 et un dispositif de maintien de câbles 4. Il est réalisé d'une seule pièce réalisée par exemple par moulage d'une matière synthétique.

La base 2 est destinée à permettre la fixation du dispositif de fixation selon l'invention sur un tronçon de chemin de câbles 6. De manière classique et comme représenté sur les dessins, ce chemin de câbles est en forme de gouttière et comporte des fils longitudinaux appelés fils de chaîne 8 et des fils transversaux appelés fils de trame 10. Les fils de chaîne 8 sont des fils rectilignes (sauf les fils de rive dans la forme de réalisation représentée qui sont toutefois sensiblement rectilignes). Les fils de trame 10 sont quant à eux en forme de U. Le tronçon de chemin de câbles 6 présente ainsi un panneau de fond 12 et deux panneaux latéraux 14. On suppose ici que le panneau de fond 12 est en position inférieure par rapport aux panneaux latéraux. Ce panneau de fond 12 est disposé dans un plan sensiblement horizontal tandis que les panneaux latéraux 14 s'étendent sensiblement verticalement. Une telle orientation est habituelle pour un tronçon de chemin de câbles. Toutefois, d'autres orientations peuvent être envisagées, avec par exemple le panneau de fond 12 disposé verticalement ou incliné.

La base 2 présente une face de montage 16 qui, dans une forme de réalisation préférée, est une face sensiblement plane. Un logement 18 en forme de goulotte est réalisé dans la face de montage 16. Ce logement 18 forme une rainure s'étendant tout le long de la face de montage 16 destinée à recevoir un fil du tronçon de chemin de câbles, un fil de chaîne 8 dans l'orientation choisie sur les figures 1 à 4. On choisit ici de considérer que ce logement 18 s'étend longitudinalement. On définit ainsi une orientation qui correspond à l'orientation du tronçon de chemin de câbles 6 représentée mais comme on le verra par la suite, le dispositif de fixation selon l'invention peut également être fixé sur le tronçon de chemin de câbles 6 en étant orienté de telle sorte que le logement 18 s'étende transversalement par rapport audit tronçon.

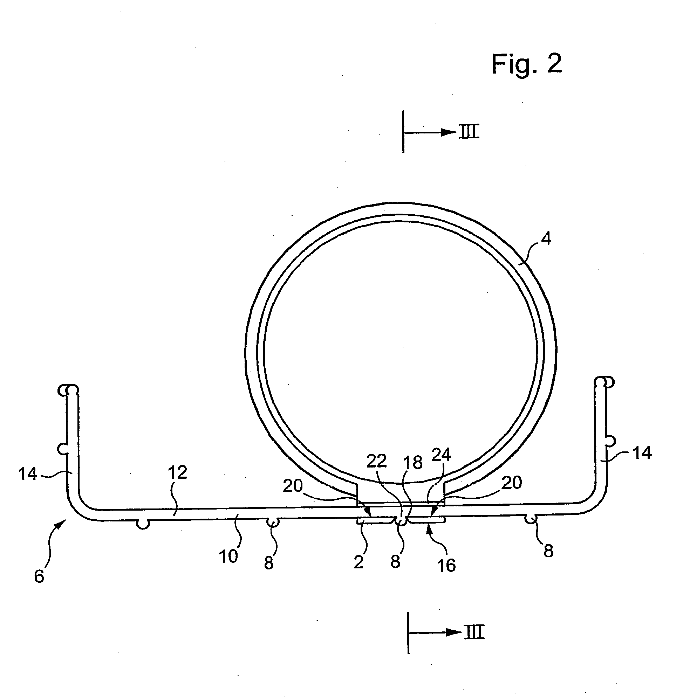

Les figures 1 et 2 permettent de voir la forme de goulotte du logement 18. Le fond de ce logement, qui selon l'orientation choisie est en position haute par rapport au logement 18, présente de préférence un rayon de courbure adapté aux diamètres des fils destinés à prendre place dans le logement 18. Si des fils de chaîne ou des fils de trame de diamètres différents sont amenés à être logés dans le logement 18, ce dernier aura de préférence un rayon de courbure correspondant au rayon de fil le plus grand. Il est toutefois envisageable d'avoir une autre forme pour le logement 18 : celui-ci pourrait par exemple être en forme de V (ou autre).

La base 2 présente en outre une surface d'appui 20 réalisée en contre-dépouille par rapport à la face de montage 16. Cette surface d'appui 20 s'étend perpendiculairement par rapport au logement 18. Elle est parallèle à la ligne de fond 22 du logement 18. Elle est également, dans la forme de réalisation représentée qui est une forme de réalisation préférée, parallèle à la face de montage 16.

La surface d'appui 20 se trouve entre la face de montage 16 et la ligne de fond 22 du logement 18. La distance séparant la surface d'appui 20 et la ligne de fond 22 (qui lui est parallèle) est de quelques dixièmes de millimètre.

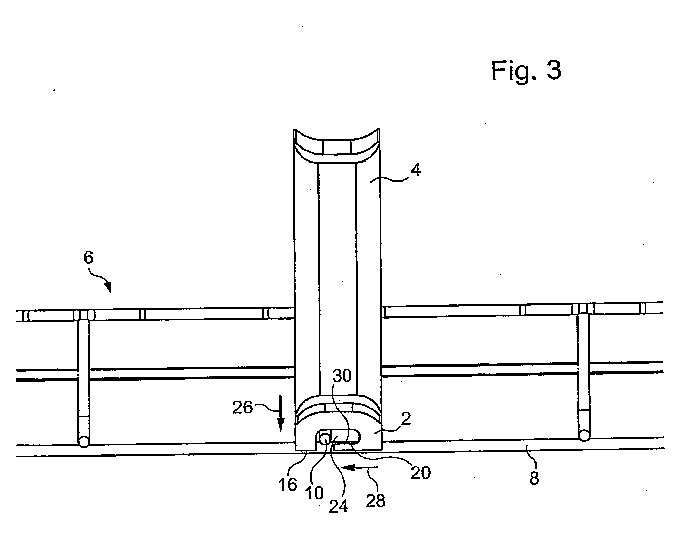

Une découpe transversale 24 permet l'accès depuis la face de montage 16 à la surface d'appui 20. Cette découpe est notamment visible sur la figure 3. La surface d'appui 20 étant destinée à servir de support à un fil du chemin de câbles sur lequel le dispositif de fixation est monté, la découpe transversale 24 permet le passage de ce fil depuis la face de montage 16 jusqu'à la surface d'appui 20. Cette découpe transversale 24 débouche ainsi dans la face de montage 16. Dans la forme de réalisation représentée sur les figures 1 à 4, la découpe transversale 24 forme avec le logement 18 une croix. Cette découpe transversale 24 s'étend de part et d'autre du logement 18 longitudinal jusqu'au bord de la face de montage 16 de la base correspondant.

Comme le montre la figure 3, cette découpe transversale 24 présente une forme en L. Une branche de ce L est perpendiculaire à la face de montage 16 tandis que l'autre branche de ce L est parallèle à la surface d'appui 20. Ainsi, pour venir en appui sur la surface 20, un fil du chemin de câbles, dans le cas des figures 1 à 4 un fil de trame 10, est tout d'abord placé parallèlement à la face de montage 16 et perpendiculairement au logement 18 longitudinal. Ce fil de trame 10 pénètre alors par la découpe transversale 24 dans la base 2 puis est coulissé parallèlement à la face de montage 16, parallèle à la surface d'appui 20, pour venir prendre place sur cette surface d'appui 20 réalisée en contre-dépouille.

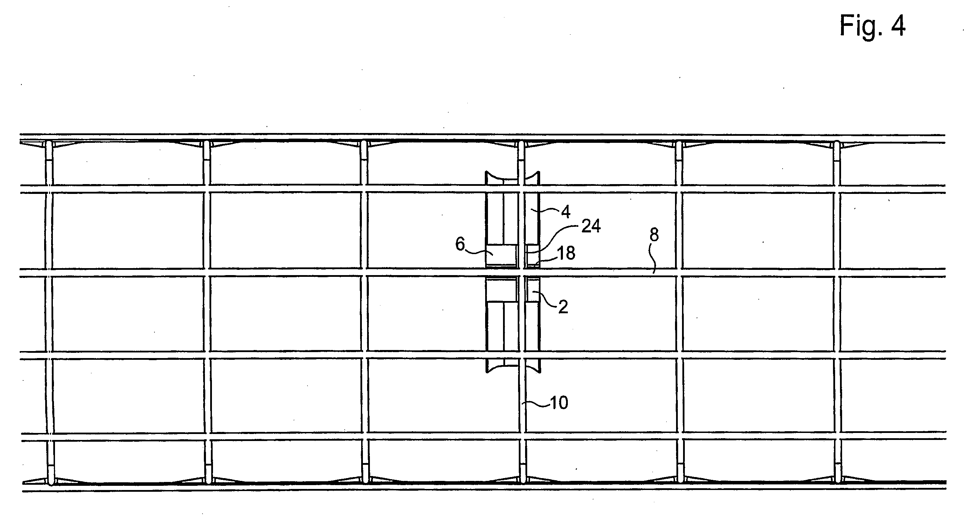

Des flèches sur la figure 3 illustrent le montage du dispositif de fixation sur le tronçon de chemin de câbles 6. La base 2 est ainsi tout d'abord positionnée au niveau d'une intersection entre un fil de chaîne 8 et un fil de trame 10 de telle sorte que la croix formée par le logement 18 et la découpe transversale 24 vienne coïncider avec l'intersection de fils du chemin de câbles au niveau de laquelle le dispositif de fixation doit prendre place (figure 4). Dans le cas de figure représenté, le logement 18 longitudinal se trouve face à un fil de chaîne 8 tandis que la découpe transversale 24 est placée face à un fil de trame 10.

La base 2 est alors abaissée selon une direction verticale (conformément à l'orientation choisie plus haut) indiquée par la première flèche 26 sur la figure 3. Le fil de chaîne 8 vient alors reposer au fond du logement 18 longitudinal (position de la figure 3). La base 2 est enfin poussée dans le sens longitudinal comme indiqué par la seconde flèche 28 de la figure 3. Le fil de trame 10 vient alors glisser sur la surface d'appui 20 pour venir par exemple en butée au fond de la découpe comme montré sur la figure 1. Un guidage est réalisé au cours de ce mouvement par le fil de chaîne 8 coulissant dans son logement 18.

Le dispositif de fixation selon l'invention, une fois monté, est maintenu d'une part par l'appui du fond du logement 18 sur le fil de chaîne 8 et d'autre part par l'appui du fil de trame 10 sur les surfaces d'appui 20. On peut prévoir ici d'avoir un léger serrage permettant ainsi le maintien du dispositif selon l'invention sur le tronçon de chemin de câbles 6 en adaptant la distance séparant la ligne de fond 22 du logement 18 des surfaces d'appui 20. Ce dispositif est alors maintenu grâce à ce serrage sans avoir à utiliser aucun outil. En outre, si des câbles (non représentés) sont présents dans le tronçon de chemin de câbles 6, le montage peut tout de même être réalisé car lors du montage, la fixation est réalisée en effectuant un mouvement longitudinal, qui est parallèle aux câbles. De ce fait, les câbles gênent peu la fixation du dispositif.

Dans la forme de réalisation des figures 1 à 4, la base 2 est réalisée dans une matière synthétique présentant une élasticité relativement importante (par rapport à une tôle métallique). Il est alors prévu un bossage 30 pour un meilleur maintien du dispositif de fixation (ou de sa base 2) sur le tronçon de chemin de câbles 6. Ce bossage 30 est réalisé à proximité du bord de la surface d'appui 20 se trouvant du côté de la découpe transversale 24. Il est positionné de manière à laisser suffisamment de place entre lui et le fond de la découpe transversale 24 pour accueillir les fils de plus grand diamètre destinés à venir prendre appui sur les surfaces d'appui 20.

Le dispositif de maintien de câbles 4 est schématisé sur les figures 1 à 4 par un anneau. Cet anneau est de préférence couvert mais cette ouverture permettant l'introduction de câbles n'est pas représentée aux dessins. Il s'agit par exemple d'un dispositif de maintien tel celui décrit dans le document US-7,107,653. Un tel dispositif permet une mise en place rapide de câbles pour les maintenir. Ce maintien est en outre réversible. Le dispositif peut ainsi être ouvert et fermé à volonté pour rajouter un câble ou en retirer.

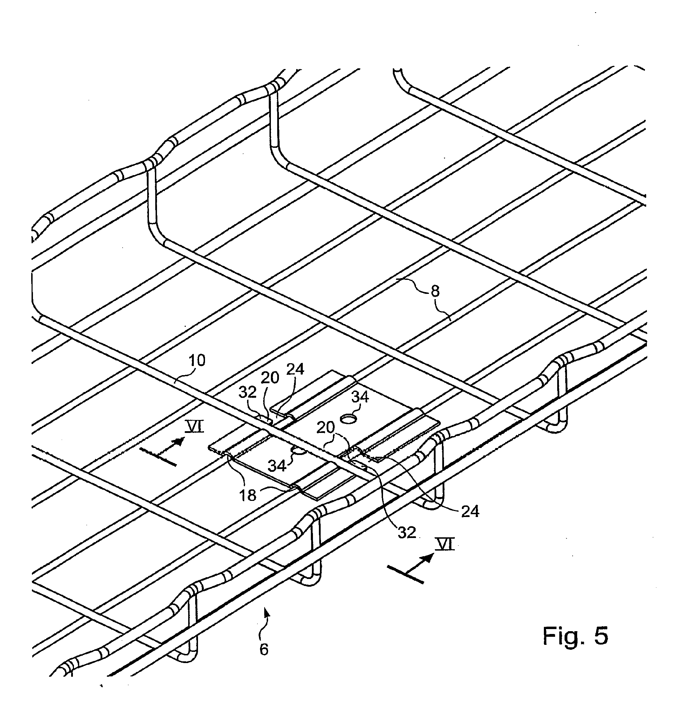

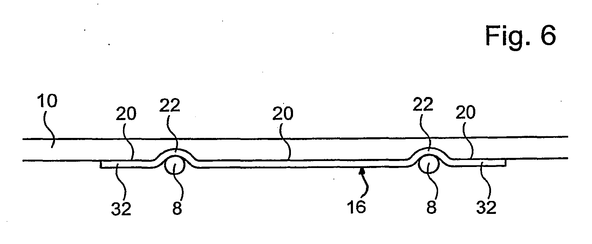

Les figures 5 et 6 montrent une autre forme de réalisation d'un dispositif de fixation selon l'invention. Cette forme de réalisation est en tôle. Pour cette forme de réalisation et les suivantes, les éléments similaires à ceux de la première forme de réalisation des figures 1 à 4 reprennent les mêmes références que sur ces figures.

Sur le dispositif des figures 5 et 6, on trouve une face de montage 16 avec deux logements 18 longitudinaux et une découpe transversale 24 pour chacun des logements 18. La face de montage 16 est la face inférieure du dispositif de fixation et n'est pas visible sur la figure 5. Le dispositif est réalisé à partir d'une tôle par découpage et emboutissage. Ainsi la formation des logements 18 dans la face de montage 16 réalise une nervure dans la face de la tôle opposée aux logements 18.

Les deux découpes transversales 24 s'étendent à chaque fois depuis un logement 18 longitudinal jusqu'à un bord de la face de montage 16. Elles sont alignées et correspondent ainsi à un même fil de trame 10 (ou fil de chaîne 8). Chaque découpe transversale 24 définit ici une languette 32 dont une face, celle opposée à la face de montage 16, appartient à la surface d'appui 20.

Pour permettre la fixation d'un accessoire quelconque, le dispositif de fixation comporte des moyens de fixation qui sont, dans l'exemple montré (cf. figure 5), deux alésages 34 de forme circulaire.

Pour le montage de ce dispositif de fixation sur le tronçon de chemin de câbles 6 comme montré sur la figure 5, la face de montage 16 est posée sur le panneau de fond 12 du tronçon de chemin de câbles 6 de telle sorte que les logements 18 longitudinaux fassent face à deux fils de chaîne 8. Le dispositif de fixation est introduit par l'intérieur du tronçon de chemin de câbles (l'intérieur correspondant à l'espace se trouvant entre les branches du U du chemin de câbles) et la face concave des logements 18 est orientée vers l'extérieur du tronçon de chemin de câbles. Un fil de trame 10 est disposé au niveau des découpes transversales 24, et plus particulièrement au niveau où les découpes transversales débouchent dans la face de montage 16. Les fils de chaîne 8 viennent alors prendre place dans les logements 18. Le dispositif de fixation est alors coulissé longitudinalement de telle sorte que le fil de trame 10 passe au-dessus des languettes 32 et prenne ainsi appui sur la surface d'appui 20 correspondante. Lors de ce dernier mouvement, un guidage est réalisé par le coulissement des fils de chaîne 8 dans les logements 18 longitudinaux.

Dans cette variante de réalisation en tôle, il est envisageable de n'avoir qu'un seul logement 18 longitudinal et qu'une seule découpe transversale 24. On a alors deux surfaces d'appui 20 disposées de part et d'autre du logement 18 longitudinal. On peut ainsi réaliser un montage du dispositif au croisement d'un fil de chaîne et d'un fil de trame du tronçon de chemin de câbles.

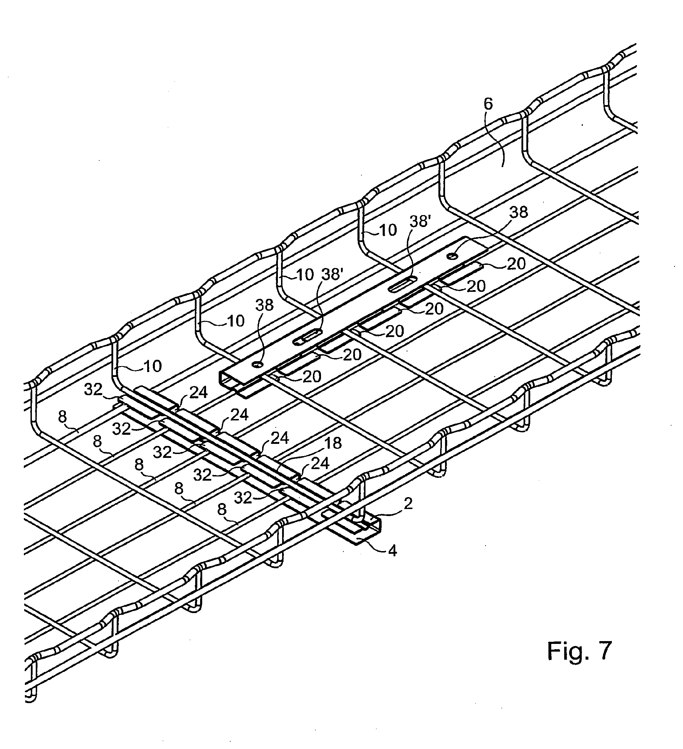

La figure 7 montre une autre forme de réalisation d'un dispositif de fixation selon l'invention. Deux dispositifs de fixation identiques sont représentés sur cette figure. Cette figure illustre comment un même dispositif de fixation selon l'invention peut être fixé avec deux orientations différentes soit à l'intérieur d'un tronçon de chemin de câbles 6 soit à l'extérieur de celui-ci.

Le dispositif de fixation représenté ici est également réalisé en tôle. Il comporte une base 2 présentant une face de montage 16 ainsi qu'une plaque de fixation 36. Ce dispositif de fixation est réalisé également par emboutissage et pliage d'une tôle. La plaque de fixation 36 est munie d'alésages 38 de forme circulaire et de trous oblongs 38'.

La face de montage 16 de ce dispositif de fixation comporte un logement 18 longitudinal et six découpes transversales 24. Les découpes transversales 24 sont régulièrement espacées avec un pas régulier, par exemple un pas de 50 mm. Ce pas correspond au pas séparant deux fils de chaîne voisins. Le pas entre deux fils de trame est quant à lui le double de celui des fils de chaîne, soit 100 mm. Ces valeurs numériques sont données à titre d'exemple non limitatif mais elles correspondent à des valeurs actuellement constatées sur certains chemins de câbles. Le fait d'avoir pour les fils de chaîne et les fils de trame un pas de séparation qui soit multiple l'un de l'autre permet le montage du dispositif de fixation dans les deux positions montrées sur la figure 7. Dans un montage, le logement longitudinal 18 reçoit un fil de trame 10, tandis que dans l'autre montage il reçoit un fil de chaîne 8. Dans le premier montage le dispositif de fixation est monté sur un fil de trame et six fils de chaîne tandis que dans le second montage, le dispositif de fixation est monté sur un fil de chaîne et trois fils de trame.

Ce montage dans deux sens différents est illustré avec le mode de réalisation représenté sur la figure 7 mais il est clair que les autres modes de réalisation décrits plus haut, et bien d'autres modes de réalisation selon l'invention, permettent également de tels montages sur un même chemin de câbles.

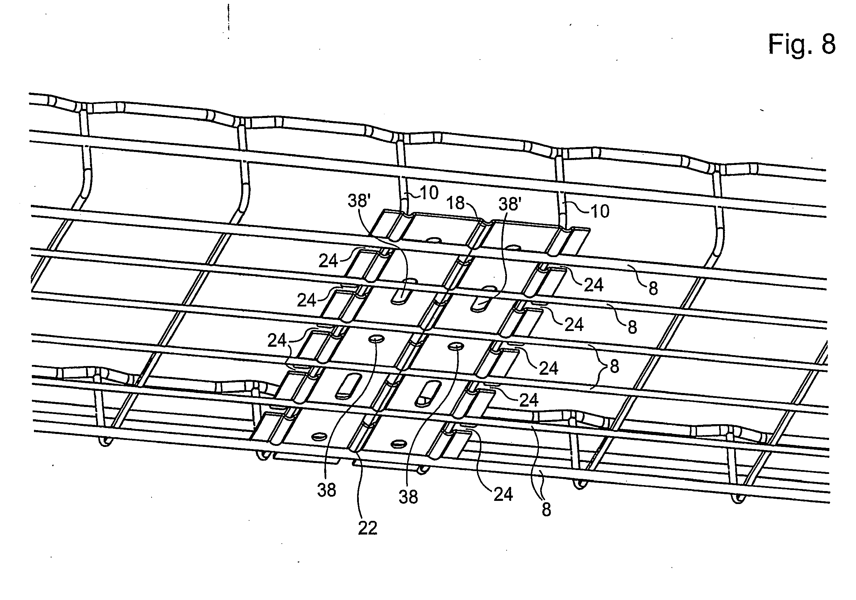

La figure 8 montre quant à elle à titre illustratif une autre forme de réalisation en tôle. Le dispositif de fixation selon cette forme de réalisation comporte trois logements longitudinaux 18 et est destiné à être monté sur deux fils de trame et six fils de chaîne ou bien trois fils de chaîne et trois fils de trame.

Bien entendu, des formes de réalisation avec plusieurs logements 18 longitudinaux et/ou plusieurs découpes transversales 24 peuvent être réalisées pour des bases de dispositifs de fixation en matière synthétique du type de celle montrée sur les figures 1 à 4.

Les dispositifs de fixation décrits ci-dessus peuvent être considérés comme des dispositifs de fixation universels car ils peuvent chacun servir sur des chemins de câbles réalisés avec des fils de différents diamètres : ils peuvent être utilisés sur un chemin de câbles utilisant des fils de différents diamètres mais ils peuvent aussi être utilisés sur deux chemins de câbles distincts réalisés avec des fils de diamètres différents. En outre, les dispositifs de fixation dont la face de montage comporte un logement longitudinal et une découpe transversale peuvent s'adapter à toute intersection de deux fils d'un chemin de câbles et peuvent se monter pour se trouver au choix essentiellement à l'intérieur du chemin de câbles ou à l'extérieur de celui-ci. Un dispositif selon l'invention permet ainsi de fixer un accessoire destiné à se trouver soit à l'intérieur d'un chemin de câbles, soit à l'extérieur de celui-ci.

On remarque en outre que le montage de ces dispositifs est facile et peut se réaliser sans outil. Ces profilés peuvent être montés à la demande sur site lors du montage d'un chemin de câbles sans aucune pièce annexe, de style boulon ou autre.

Même si un dispositif selon l'invention peut être réalisé en tôle pliée et découpée, il s'agit d'un dispositif présentant une bonne précision et offrant une grande rigidité. Une forme de réalisation en matière synthétique moulée permet également une bonne précision. Elle présente l'avantage de ne pas être agressive vis-à-vis des câbles destinés à prendre place dans le chemin de câbles.

Les dispositifs décrits sont destinés essentiellement à être montés dans un tronçon de chemin de câbles mais il peut également être envisagé, pour les versions à plusieurs logements longitudinaux et/ou plusieurs découpes transversales, de les monter entre deux tronçons de chemin de câbles.

La présente invention ne se limite pas aux formes de réalisation décrites ci-dessus à titre d'exemples non limitatifs et aux variantes évoquées. Elle concerne également toutes les variantes à la portée de l'homme du métier dans le cadre des revendications ci-après.

## Revendications

1. Dispositif de fixation, pour chemin de câbles (6) en fils comportant d'une part des fils de chaîne (8) longitudinaux et d'autre part des fils de trame (10) transversaux, présentant une base (2) avec une face de montage (16) sur le chemin de câbles et des moyens de fixation (4 ; 34, 38, 38'), et comportant :
- au moins un logement (18) longitudinal en forme de goulotte destiné à recevoir un premier fil du chemin de câbles et réalisé dans la face de montage (16),
- au moins une surface d'appui (20) réalisée en contre-dépouille par rapport à la face de montage (16), ladite surface s'étendant perpendiculairement au logement (18) longitudinal et se trouvant disposée parallèlement au fond (22) du logement (18) longitudinal à un niveau intermédiaire entre le fond (22) de ce logement (18) et la face de montage (16), et
- au moins une découpe transversale (24) correspondant à chaque intersection entre un logement longitudinal et une surface d'appui, cette découpe (24) s'étendant d'un bord de la face de montage (16) jusqu'à un logement (18) longitudinal,
le dispositif étant **caractérisé en ce qu'**il présente une pluralité de logements (18) longitudinaux similaires disposés parallèlement les uns par rapport aux autres selon un pas régulier ; une pluralité de découpes transversales (24) similaires disposées parallèlement les unes par rapport aux autres selon un pas régulier ; et **en ce que** le pas séparant les logements (18) longitudinaux est le même que celui séparant les découpes transversales (24).

2. Dispositif selon la revendication 1, **caractérisé en ce qu'**un bossage (30) est réalisé sur la surface d'appui (20).

3. Dispositif selon l'une des revendications 1 à 2, **caractérisé en ce que** la base (2) est réalisée dans une tôle métallique découpée et pliée.

4. Dispositif selon la revendication 3, **caractérisé en ce que** les moyens de fixation se présentent sous la forme d'alésages circulaires (34 ; 38) et/ou de trous oblongs (38') réalisés dans la tôle.

5. Ensemble comportant d'une part un tronçon de chemin de câbles présentant des fils de chaîne (8) longitudinaux et des fils de trame (10) transversaux en forme de U et d'autre part un dispositif de fixation selon l'une des revendications 1 à 4, **caractérisé en ce que** la base (2) du dispositif de fixation se trouve à l'intérieur du tronçon de chemin de câbles, c'est-à-dire entre les branches du U des fils de trame, et **en ce que** chaque logement (18) longitudinal reçoit un fil de chaîne (8).

6. Dispositif de fixation, pour chemin de câbles (6) en fils comportant d'une part des fils de chaîne (8) longitudinaux et d'autre part des fils de trame (10) transversaux, présentant une base (2) avec une face de montage (16) sur le chemin de câbles et des moyens de fixation (4 ; 34, 38, 38'), et comportant :
- au moins un logement (18) longitudinal en forme de goulotte destiné à recevoir un premier fil du chemin de câbles et réalisé dans la face de montage (16),
- au moins une surface d'appui (20) réalisée en contre-dépouille par rapport à la face de montage (16), ladite surface s'étendant perpendiculairement au logement (18) longitudinal et se trouvant disposée parallèlement au fond (22) du logement (18) longitudinal à un niveau intermédiaire entre le fond (22) de ce logement (18) et la face de montage (16),
- au moins une découpe transversale (24) correspondant à chaque intersection entre un logement longitudinal et une surface d'appui, cette découpe (24) s'étendant d'un bord de la face de montage (16) jusqu'à un logement (18) longitudinal,
**caractérisé en ce qu'**il comporte un unique logement (18) longitudinal en forme de goulotte, une unique découpe transversale (24) et deux surfaces d'appui (20) disposées de part et d'autre du logement (18) longitudinal.

7. Dispositif selon la revendication 6, **caractérisé en ce qu'**un bossage (30) est réalisé sur la surface d'appui (20).

8. Dispositif selon l'une des revendications 6 et 7, **caractérisé en ce que** la base (2) est réalisée dans une tôle métallique découpée et pliée.

9. Dispositif selon la revendication 8, **caractérisé en ce que** les moyens de fixation se présentent sous la forme d'alésages circulaires (34 ; 38) et/ou de trous oblongs (38') réalisés dans la tôle.

10. Ensemble comportant d'une part un tronçon de chemin de câbles présentant des fils de chaîne (8) longitudinaux et des fils de trame (10) transversaux en forme de U et d'autre part un dispositif de fixation selon l'une des revendications 6 à 9, **caractérisé en ce que** la base (2) du dispositif de fixation se trouve à l'intérieur du tronçon de chemin de câbles, c'est-à-dire entre les branches du U des fils de trame, et **en ce que** chaque logement (18) longitudinal reçoit un fil de chaîne (8).

## Claims

1. Fixing device, for wire cable trays (6) comprising on the one hand longitudinal warp wires (8) and on the other hand transverse weft wires (10), having a base (2) with a mounting face (16) on the cable tray and fixing means (4; 34, 38, 38'), and comprising:
- at least one trough-shaped longitudinal housing (18) intended to receive a first wire of the cable tray and produced in the mounting face (16),
- at least one bearing surface (20) undercut relative to the mounting face (16), said surface extending perpendicularly to the longitudinal housing (18) and being disposed parallel to the back (22) of the longitudinal housing (18) at an intermediate level between the back (22) of that housing (18) and the mounting face (16), and
- at least one transverse cut-out (24) corresponding to each intersection between a longitudinal housing and a bearing surface, this cut-out (24) extending from one edge of the mounting face (16) to a longitudinal housing (18),
the device being **characterized in that** it has a plurality of similar longitudinal housings (18) disposed parallel to each other at a regular pitch; a plurality of similar transverse cut-outs (24) disposed parallel to each other at a regular pitch; and **in that** the pitch between the longitudinal housings (18) is the same as that between the transverse cut-outs (24).

2. Device according to claim 1, **characterized in that** a boss (30) is produced on the bearing surface (20).

3. Device according to one of claims 1 to 2, **characterized in that** the base (2) is produced in sheet metal cut and bent to shape.

4. Device according to claim 3, **characterized in that** the fixing means take the form of circular bores (34; 38) and/or oblong holes (38') produced in the sheet metal.

5. Assembly comprising on the one hand a section of cable tray having longitudinal warp wires (8) and transverse U-shaped weft wires (10) and on the other hand a fixing device according to any of claims 1 to 4, **characterized in that** the base (2) of the fixing device is inside the section of cable tray, that is to say between the branches of the U-shape of the weft wires, and **in that** each longitudinal housing (18) receives a warp wire (8).

6. Fixing device for wire cable trays (6) comprising on the one hand longitudinal warp wires (8) and on the other hand transverse weft wires (10), having a base (2) with a mounting face (16) on the cable tray and fixing means (4; 34, 38, 38'), and comprising:
- at least one trough-shaped longitudinal housing (18) intended to receive a first wire of the cable tray and produced in the mounting face (16),
- at least one bearing surface (20) undercut relative to the mounting face (16), said surface extending perpendicularly to the longitudinal housing (18) and being disposed parallel to the back (22) of the longitudinal housing (18) at an intermediate level between the back (22) of that housing (18) and the mounting face (16),
- at least one transverse cut-out (24) corresponding to each intersection between a longitudinal housing and a bearing surface, this cut-out (24) extending from one edge of the mounting face (16) to a longitudinal housing (18),
**characterized in that** it comprises a single trough-shaped longitudinal housing (18), a single transverse cut-out (24) and two bearing surfaces (20) disposed on opposite sides of the longitudinal housing (18).

7. Device according to claim 6, **characterized in that** a boss (30) is produced on the bearing surface (20).

8. Device according to one of claims 6 and 7, **characterized in that** the base (2) is produced in sheet metal cut and bent to shape.

9. Device according to claim 8, **characterized in that** the fixing means take the form of circular bores (34; 38) and/or oblong holes (38') produced in the sheet metal.

10. Assembly comprising on the one hand a section of cable tray having longitudinal warp wires (8) and transverse U-shaped weft wires (10) and on the other hand a fixing device according to any of claims 6 to 9, **characterized in that** the base (2) of the fixing device is inside the section of cable tray, that is to say between the branches of the U-shape of the weft wires, and **in that** each longitudinal housing (18) receives a warp wire (8).

## Patentansprüche

1. Befestigungsvorrichtung für eine Kabelwanne (6) aus Draht mit einerseits längs verlaufenden Kettdrähten (8) und andererseits quer verlaufenden Schussdrähten (10), die eine Basis (2) mit einer Fläche (16) zur Montage auf der Kabelwanne und Befestigungsmittel (4; 34, 38, 38') aufweist und die umfasst:
- wenigstens eine längs verlaufende, rinnenförmige Aufnahme (18), die zum Aufnehmen eines ersten Drahts der Kabelwanne bestimmt ist und in der Montagefläche (16) ausgeführt ist,
- wenigstens einer Auflagefläche (20), die in Hinterschneidung bezüglich der Montagefläche (16) ausgeführt ist, wobei sich diese Fläche rechtwinklig zu der längs verlaufenden Aufnahme (18) erstreckt und parallel zum Boden (22) der längs verlaufenden Aufnahme (18) in einer mittleren Höhe zwischen dem Boden (22) dieser Aufnahme (18) und der Montagefläche (16) angeordnet ist, und
- wenigstens einen quer verlaufenden Ausschnitt (24), der jedem Schnittpunkt zwischen einer längs verlaufenden Aufnahme und einer Auflagefläche entspricht, wobei der Ausschnitt (24) von einem Rand der Montagefläche (16) bis zu einer längs verlaufenden Aufnahme (18) verläuft,
wobei die Vorrichtung **dadurch gekennzeichnet ist, dass** sie eine Vielzahl ähnlicher, längs verlaufender Aufnahmen (18), die parallel zueinander mit gleichem Abstand angeordnet sind, und eine Vielzahl ähnlicher, quer verlaufender Ausschnitte (24) aufweist, die parallel zueinander mit gleichem Abstand angeordnet sind, und dass der Abstand zwischen den längs verlaufenden Aufnahmen (18) dem zwischen den quer verlaufenden Ausschnitten (24) liegenden Abstand entspricht.

2. Vorrichtung nach Anspruch 1,
**dadurch gekennzeichnet, dass** ein Buckel (30) auf der Auflagefläche (20) ausgeführt ist.

3. Vorrichtung nach einem der Ansprüche 1 bis 2,
**dadurch gekennzeichnet, dass** die Basis (2) als ausgeschnittenes und gefalztes Metallblech ausgeführt ist.

4. Vorrichtung nach Anspruch 3,
**dadurch gekennzeichnet, dass** die Befestigungsmittel die Form von runden Bohrungen (34; 38) und/oder Längsschlitzen (38') haben, die in dem Blech ausgeführt sind.

5. Einheit mit sowohl einem Kabelwannenstück, das längs verlaufende Kettdrähte (8) und quer verlaufende, U-förmige Schussdrähte aufweist, als auch einer Befestigungsvorrichtung nach einem der Ansprüche 1 bis 4,
**dadurch gekennzeichnet, dass** sich die Basis (2) der Befestigungsvorrichtung innen in dem Kabelwannenstück befindet, das heißt zwischen den U-Schenkeln der Schussdrähte, und dass jede längs verlaufende Aufnahme (18) einen Kettdraht (8) aufnimmt.

6. Befestigungsvorrichtung für eine Kabelwanne (6) aus Draht mit einerseits längs verlaufenden Kettdrähten (8) und andererseits quer verlaufenden Schussdrähten (10), die eine Basis (2) mit einer Fläche (16) zur Montage auf der Kabelwanne und Befestigungsmittel (4; 34, 38, 38') aufweist und die umfasst:
- wenigstens eine längs verlaufende, rinnenförmige Aufnahme (18), die zum Aufnehmen eines ersten Drahts der Kabelwanne bestimmt ist und in der Montagefläche (16) ausgeführt ist,
- wenigstens einer Auflagefläche (20), die in Hinterschneidung bezüglich der Montagefläche (16) ausgeführt ist, wobei sich diese Fläche rechtwinklig zu der längs verlaufenden Aufnahme (18) erstreckt und parallel zum Boden (22) der längs verlaufenden Aufnahme (18) in einer mittleren Höhe zwischen dem Boden (22) dieser Aufnahme (18) und der Montagefläche (16) angeordnet ist, und
- wenigstens einen quer verlaufenden Ausschnitt (24), der jedem Schnittpunkt zwischen einer längs verlaufenden Aufnahme und einer Auflagefläche entspricht, wobei der Ausschnitt (24) von einem Rand der Montagefläche (16) bis zu einer längs verlaufenden Aufnahme (18) verläuft,
**dadurch gekennzeichnet, dass** sie eine einzige längs verlaufende rinnenförmige Aufnahme (18), einen einzigen quer verlaufenden Ausschnitt (24) und zwei beidseits der längs verlaufenden Aufnahme (18) angeordnete Auflageflächen (20) umfasst

7. Vorrichtung nach Anspruch 6,
**dadurch gekennzeichnet, dass** ein Buckel (30) auf der Auflagefläche (20) ausgeführt ist.

8. Vorrichtung nach einem der Ansprüche 6 bis 7,
**dadurch gekennzeichnet, dass** die Basis (2) als ausgeschnittenes und gefalztes Metallblech ausgeführt ist.

9. Vorrichtung nach Anspruch 8,
**dadurch gekennzeichnet, dass** die Befestigungsmittel die Form von runden Bohrungen (34; 38) und/oder Längsschlitzen (38') haben, die in dem Blech ausgeführt sind.

10. Einheit mit sowohl einem Kabelwannenstück, das längs verlaufende Kettdrähte (8) und quer verlaufende, U-förmige Schussdrähte aufweist, als auch einer Befestigungsvorrichtung nach einem der Ansprüche 6 bis 9,
**dadurch gekennzeichnet, dass** sich die Basis (2) der Befestigungsvorrichtung innen in dem Kabelwannenstück befindet, das heißt zwischen den U-Schenkeln der Schussdrähte, und dass jede längs verlaufende Aufnahme (18) einen Kettdraht (8) aufnimmt.
